**Europäisches Patentamt**

**European Patent Office**

**Office européen des brevets**

(19)

(11) Veröffentlichungsnummer : **0 496 905 B1**

(12) **EUROPÄISCHE PATENTSCHRIFT**

(45) Veröffentlichungstag der Patentschrift :
04.05.94 Patentblatt 94/18

(51) Int. Cl.$^5$ : **C02F 1/50, D21C 9/08**

(21) Anmeldenummer : **91101061.9**

(22) Anmeldetag : **28.01.91**

(54) **Lignolsulfate zur Herabsetzung der Schleimbildung in Anlagen mit einem Wasserkreislauf, Verfahren zu seiner Herstellung sowie seine Verwendung.**

(43) Veröffentlichungstag der Anmeldung :
05.08.92 Patentblatt 92/32

(45) Bekanntmachung des Hinweises auf die
Patenterteilung :
04.05.94 Patentblatt 94/18

(84) Benannte Vertragsstaaten :
AT BE CH DE DK ES FR GB GR IT LI LU NL SE

(56) Entgegenhaltungen :
EP-A- 0 185 963
US-A- 4 127 383

(56) Entgegenhaltungen :
DAS OESTERREICHISCHE PAPIER Bd. 20, Nr.
9, September 1983, Seiten 34 - 35; OBERKO-
FLER,J.: 'BIOCHEM:VERFAHREN ZUR
SCHLEIM UND ABLAGERUNGSKONTROLLE
IN DER PAPIERINDUSTRIE'

(73) Patentinhaber : Oberkofler, Jörg, Dr. Dipl.-Ing.
Litzlberg 23 A
A-4863 Seewalchen (AT)

(72) Erfinder : Oberkofler, Jörg, Dr.
Litzlberg 23 A
A-4863 Seewalchen (AT)

(74) Vertreter : Kador & Partner
Corneliusstrasse 15
D-80469 München (DE)

## Beschreibung

Die Erfindung betrifft ein Lignosulfonat nach Anspruch 1, ein Verfahren zu seiner Herstellung sowie seine Verwendung.

Mikroorganismen finden in Wasserkreisläufen von Anlagen oft ideale Bedingungen zu ihrer Vermehrung vor. Insbesondere in Siebwassern von Papiermaschinen, das in zunehmendem Maße im geschlossenen Kreislauf geführt wird, liegen ideale Bedingungen hinsichtlich des anorganischen und organischen Nährstoffangebotes, der Temperatur, des pH-Wertes und des Sauerstoffgehaltes zu ihrer unbegrenzten Vermehrung vor. Das führt zu einer drastisch hohen Schleimbildung an den Wänden der Anlageteile, wie Leitungen, Behälter und Pumpen, der zur Kreislaufführung des Siebwasser verwendeten Anlage. Beim Lösen der Schleimteile von den Wänden führt dies zur Bildung von Batzen und Löchern in der Papierbahn. Dadurch wird die Papierbahn geschwächt, d.h. es kann zu Abrissen der Papierbahn und damit zwangsläufig zum Maschinenstillstand kommen.

Traditionell werden in der Papierindustrie deshalb zur Kontrolle des bakteriellen Wachstums, in die Papiermaschinenkreisläufe während des Produktionsablaufes Biozide in erheblichen Mengen zugesetzt. Solche Biozide könne die, die Schleimbildung bewirkenden Bakterien vernichten. Biozide Schleimbekämpfungsmittel müssen jedoch aus Wirkungs- und Funktionsgründen nicht-faseraffin konzipiert sein. Dadurch verbleiben sie nicht am Papier, sondern verlassen die Papierfabrik im Abwasser. Neben den Bakterien treten im Siebwasser auch Pilze auf, sodaß zusätzlich auch Fungizide eingesetzt werden. Das bekannte Verfahren, daß auch als "Total Kill"-Verfahren bezeichnet wird, ist daher nicht nur mit erheblichen Kosten behaftet, sondern führt auch zu einer Umweltbelastung.

Aus Gründen des Umweltschutzes, aber auch aus wirtschaftlichen Überlegungen heraus, war es deshalb eine Zielsetzung im Papierfabrikationssektor, die Schleimbildung in den Kreislaufwasseranlagen mit umweltfreundlichen und dennoch wirksamen Mitteln herabzusetzen.

In der US-A-2 551 446 wird zur Verhinderung des Wachstums von Mikroorganismen in Wasser beschrieben, ein Kupfersalz, z.B. Kupfersulfat einzusetzen. Um das Ausfällen des Kupfersulfates zu verhindern, wird ein Lignosulfonat als Komplexbildner verwendet. Aus der CA-A- 807 123 ist es bekannt, halogenierte Levulinsäure als Biozid einzusetzen. Da halognierte Levulinsäure in Wasser nur schwer löslich ist, werden Ligninsulfonsäure und Dimethylsulfoxid als Dispergiermittel vorgeschlagen.

Aus "Das österreichische Papier" 20, Nr. 9, 34-35 ist es bekannt, dem Siebwasser einer Papiermaschine ein Lignosulfonat zuzusetzen, und zwar zusammen mit einem Biozid. Dadurch kann die Menge des zugesetzten Biozides reduziert werden.

Es wird dazu angenommen, daß das Lignosulfonat durch elektrostatischen Ladungsausgleich die als Nahrungbrücke zum Kreislaufsystem wirkenden Stoffwechselprodukte neutralisiert und damit für die Nahrungszufuhr funktionsunfähig macht. Auf diese Weise wird die bakterielle Aktivität gesteuert und damit auch der Pilzbefall. In dem erwähnten Artikel ist angegeben, daß als biologischer Komplexbildner ein "speziell ausgewähltes und modifiziertes Lignosulfonat" zum Einsatz kommt. Um welches "speziell ausgewählte und modifizierte Lignosulfonat" es sich dabei handelt, geht aus diesem Artikel nicht hervor. Handelsübliche Lignosulfonate sind jedenfalls für den genannten Zweck ungeeignet, wie sich aus Versuchen ergeben hat.

Aus der EP-B- 0 185 963, welche auf die gleiche Anmelderin zurückgeht, ist ein Verfahren zur Herabsetzung der Schleimbildung in Wasserkreisläufen bekannt, nach dem ein Lignosulfonat mit einem gewichtsmittleren Molekulargewicht von 4000 bis 7000 bzw. 2000 bis 3000 (Zahlenmittel) eingesetzt wird. Nach dieser Methode können gute Ergebnisse bei der Herabsetzung der Schleimbildung erreicht werden.

Es hat sich jedoch im Betrieb gezeigt, daß das bekannte spezielle Lignosulfonat den Anforderungen nicht voll genügt. Es versagt dann, wenn eine verminderte oder fehlende Durchströmung der Kreislaufwasserführung, beispielsweise in bestimmten Bereichen der Anlage, auftritt.

Aufgabe der vorliegenden Erfindung ist es, diesen Nachteil zu überwinden, insbesondere ein Lignosulfonatprodukt mit verbesserten Eigenschaften bei der Verhinderung der Schleimbildung zur Verfügung zu stellen.

Es war angenommen worden, daß die Wirksamkeit des bekannten Lignosulfonates auf seiner geringen Viskosität und damit seines geringen Molekulargewichtes beruht. Ausgehend von dieser Annahme wurden durch Fraktionierung Lignosulfonate hergestellt mit noch niedrigerem Molekulargewicht. Diese Lignosulfonate zeigten jedoch wenig oder gar keine Verbesserung.

Überraschenderweise tritt eine sprunghafte Verbesserung der Verminderung der Schleimbildung dann ein, wenn man ein Lignosulfonat mit einem gewichts mittleren Molekulargewicht von 8000 bis 15 000 bzw. einem Zahlenmittleren Molekulargewicht von 1000 bis 3000 einsetzt, das erhältlich ist, indem man eine an Calcium verarmte Sulfitlauge einer sauren Holzulfitpulpe mit einer Menge an Calciumhydroxid versetzt wird, die ausreicht, um Calcium-Lignosulfonat mit höherem Molekulargewicht auszuscheiden, man das Sulfitlauge-Filtrat mit Natriumsulfat und Schwefelsäure behandelt, um das Calcium weitgehend in Form von Calciumsulfat abzutrennen, und man das Filtrat, welches das Lignosulfonat enthält, gegebenenfalls einengt.

Der Einsatz dieses Lignosulfonates führt zu einer erheblichen Verbesserung der Abrißdaten im Betrieb einer Papiermaschine. Das wird unter anderem darauf zurückgeführt, daß das Lignosulfonat auch bei verminderter oder fehlender Durchströmung der Kreislaufwasserführung eine erhöhte Wirkung zeigt. Eine quantitativ reduzierte und qualitativ verbesserte Ablagerungssituation im Papiermaschinenkreislauf führt in logischer Konsequenz zu geringerer Störanfälligkeit in Bezug auf ablagerungsbedingte Abrisse, Batzen oder Löcher in der Papierbahn.

Vorzugsweise beträgt das Molekulargewicht des erfindungsgemäßen, zugesetzten Lignosulfonats im Gewichtsmittel etwa 12700 und im Zahlenmittel etwa 1564. In einer weiteren bevorzugten Ausführungsform beträgt das Molekulargewicht des zugesetzten Lignosulfonats im Gewichtsmittel 8500 und im Zahlenmittel 1500. Mit diesen Lignosulfonaten werden besonders gute und stabile Ergebnisse erreicht.

Überraschenderweise führt demnach ein Lignosulfonatprodukt, das ein höheres Molekulargewicht als das bekannte Lignosulfonatprodukt aufweist, zu einer Verbesserung in der Herabsetzung der Schleimbildung. Es wird angenommen, daß dies hauptsächlich auf den verwendeten Anteil an Oligosacchariden von 12 bis 16 Gew% zurückzuführen ist.

Weitere Charakteristika des erfindungsgemäß zum Einsatz kommenden Lignosulfonats bestehen darin, daß es aus einem Holz gewonnen wird, das zumindest teilweise aus Nadelholz besteht, wobei dieses Produkt einen geringen Anteil von reduzierenden Zuckern von maximal 1,0 Gew% aufweist. Es ist bekannt, daß reduzierende Zucker das Wachstum der Mikroorganismen unterstützen. Der Sulfonierungsgrad des Lignosulfonatproduktes beträgt bevorzugt 1,2 bis 1,5.

Weiteres Merkmal des erfindungsgemäß eingesetzten Lignosulfonatproduktes ist, daß es einen Mengenanteil von 40-55% kurzkettiger (1-5 Pentose und/oder Hexoseeinheiten) teilweise oxidativ veränderter Bruchstücke von Zellulose und Zellulosebegleitstoffen enthält.

Das Lignosulfonat kann bei dem erfindungsgemäßen Verfahren in einer Konzentration von 0,1 g bis 1,0 g/m³ Wasser eingesetzt werden. Das Lignosulfonat wird dabei kontinuierlich zudosiert. Zur weiteren Verminderung einer möglichen Batzenbildung können ferner geringe Mengen der dafür bekannten Biozide dem Kreislaufwasser zugesetzt werden. Das Biozid wird dabei periodisch zugegeben, wobei die Dauer des Biozidzusatzes 4 bis 50% der Dauer des Lignosulfonatzusatzes beträgt.

Als Biozide können eine oder mehrere organische Schwefel-Stickstoffverbindungen oder organische Brom-Stickstoff-verbindungen verwendet werden, z. B. Methylen-bis-thiocyanat oder Carbamate oder 2,2-Dibrom-2-cyanoacetamid oder 3,5-Dimethyl-1,3,5-2H-Tetrahydrothiadiazin-2-thion.

Die Vorteilhaftigkeit des erfindungsgemäßen Verfahrens wird nachfolgend anhand von vergleichenden Versuchen dargestellt. Dazu werden das aus der EP-PS 0 185 963 bekannte Lignosulfonat (Produkt A), ein marktübliches Produkt (Produkt X) und das erfindungsgemäß eingesetzte Produkt (Produkt B), einander gegenübergestellt.

Das erfindungsgemäß eingesetzte, mehrfach fraktionierte und modifizierte Produkt wird wie folgt hergestellt.

Holzspäne werden den üblichen Bedingungen des Sulfitaufschlusses unterworfen.

Zu 272 Gewichtsteilen der Sulfitlauge der sauren Holzsulfitpulpe, welche an Calcium verarmt ist, und 45% Feststoff enthält, werden 44 Gewichtsteile Calciumhydroxid (Ca(OH)$_2$) hinzugefügt. Das abgeschiedene Calcium-Lignosulfonat mit höherem Molekulargewicht wird durch Filtration entfernt. Zu dem Filtrat werden auf 130 Gewichtsteile Feststoff, 22 Gewichtsteile 36%ige Schwefelsäure (H$_2$SO$_4$) zugesetzt. Das abgeschiedene Calciumsulfat wird durch Filtration entfernt und das Filtrat wird durch Verdampfen auf 40% Feststoffgehalt eingeengt. Zu 102 Gewichtsteilen davon, werden 16 Gewichtsteile Natriumsulfat (Na$_2$SO$_4$) und 2,3 Gewichtsteile Schwefelsäure (H$_2$SO$_4$), zugesetzt. Der Calciumsulfat-Niederschlag wird durch Filtration entfernt und dem Filtrat wird Natriumhydroxid zugesetzt, um das pH auf 7,5 einzustellen. Dabei werden 100 Gewichtsteile an Feststoff des Produktes erhalten, und die Lösung kann wahlweise weiter eingeengt werden.

Das erhaltene Produkt weist folgende Zusammensetzung in % auf:

| | |
|---|---|
| Gesamt S | 6,3 |
| nicht-sulfon. S | 0,9 |
| Sulfon. S | 5,4 |
| Na | 11,0 |
| Ca | 0,6 |
| phenolisches OH | 1,2 |
| OCH$_3$ | 5,6 |
| Zucker | 0,5 |
| Na-Lignosulfonat | 43 |

Das so erhaltene Produkt hat ein gewichtsmittleres Molekulargewicht von etwa 12700 bzw. ein Zahlenmittel von etwa 1570. Es versteht sich, daß durch leichte Variation des beschriebenen Verfahrens andere Molekulargewichte im beanspruchten Bereich erhalten werden können. Der Anteil an Oligosacchariden beträgt bei dem erhaltenen Produkt etwa 14 Gew%.

## Versuch 1

In einer Papiermaschine (300 TATO Produktion holzfrei/gestrichen) wurden die Lignosulfonatprodukte A, B und X jeweils über einen Zeitraum von 3 Monaten eingesetzt. Die durchschnittliche Anzahl der Abrisse der Papierbahnen, welche ein Gradmesser für Schleimund Ablagerungskontrolle in Papiermaschinenkreisläufen ist, wurde ermittelt. Produktparameter und Ergebnisse sind in der Tabelle 1 zusammengestellt.

Der Tabelle ist zu entnehmen, daß mit einem Lignosulfonat-Produkt gemäß der vorliegenden Erfindung eine Verbesserung der Abrißzahl erreicht werden kann. Die Verbesserung beträgt im Vergleich zu einem Lignosulfonat gemäß der EP-B- 0 185 963 10%, gegenüber handelsüblichen Lignosulfonaten sogar 20%.

## Versuch 2

Kulturen schleimbildender Bakterien, wie beispielsweise Pseudomonas fluorescens, wurden jeweils mit Lösungen von Lignosulfonat A und B versetzt. Mittels der Kapillar-Durchflußzeit-Messung (Glaskapillare, durchgeschicktes Flüssigkeitsvolumen und Druckverhältnisse sind konstant), wurden in Abhängigkeit von der Zeit auftretende Viskositätsänderungen ermittelt. Gleichzeitig wurde eine Blindprobe, also ohne Zusatz von Lignosulfonat, gefahren. Die Kulturlösungen wurden für eine Dauer von 100 Stunden gerührt und danach wurde das Rührwerk abgeschaltet. Das Ergebnis ist in Tabelle 2 zusammengefaßt.

Wie der Tabelle 2 zu entnehmen ist, steigt die Viskosität ohne Zusatz von Lignosulfonat während einer Betriebszeit von 100 Stunden merklich an. Lignosulfonat A und B verhindern dagegen im wesentlichen eine Zunahme der Viskosität.

Ein Unterbrechung der Umwälzung bewirkt einen ausgeprägten Anstieg der Viskosität der Kulturen, die mit Lignosulfonat A versetzt sind oder keinen Zusatz enthalten. Die Kultur, die Lignosulfonat B zugesetzt enthält, zeigt praktisch keinen Anstieg in der Viskosität. Während also Lignosulfonat A und B in bewegten Systemen, wie etwa Papierstoff- oder Rückwasser-durchflossenen Rohrleitungen und Gerinnen einer Papiermaschine, die Bildung bakteriellen Schleimes verhindern können, bringt das erfindungsgemäß eingesetzte Lignosulfonat B den wesentlichen zusätzlichen Effekt, die Schleimbildung auch in unbewegten Systemen zu vermindern. Das ist für jene kritischen Zonen eines Papiermaschinen-Kreislaufsystems von entscheidender Bedeutung, die durch fehlende oder stark verminderte Strömung charakterisiert sind. An solchen Stellen tritt die Schleimbildung in der Regel zu allererst und im verstärkten Maße auf.

Es versteht sich von selbst, daß dieser Effekt, den das erfindungsgemäß eingesetzte Lignosulfonat mit sich bringt, von entscheidender Bedeutung für das Verfahren ist. Die Abrißzahl kann dadurch wesentlich verbessert werden.

Eine verbesserte Abrißzahl bedeutet gleichzeitig eine Verbesserung der Wirtschaftlichkeit des Verfahrens, da weniger ungewollte Maschinenstillstände erforderlich sind.

## Tabelle 1

| | MG | Sulfonierungs-grad(%) | Oligosa-ccharide (%) | Ø Abrisse/ 100 Tons |
|---|---|---|---|---|
| A | 4000-7000 | 1,2 – 1,5 | 25 – 40 | 2,75 |
| B | 12700 | 1,2 – 1,5 | 12 – 16 | 2,5 |
| X | ±50.000 | 0,7 | nicht definiert | 3,2 |

## Tabelle 2

| | Zunahme der Viskosität ($\eta$) | | |
|---|---|---|---|
| Produkt | Startwert | nach 100 Std. mit Rühren | nach weiteren 100 Std. ohne Rühren |
| A | 1 | 1.1 | 3.1 |
| B | 1 | 1.1 | 1.3 |
| ohne Zusatz | 1 | 1.7 | 3.4 |

**Patentansprüche**

1. Lignosulfonat mit einem gewichtsmittleren Molekulargewicht von 8000 bis 15000, erhältlich indem man eine an Calcium verarmte Sulfitlauge einer sauren Holzsulfitpulpe mit einer Menge an Calciumhydroxid versetzt, die ausreicht, um Calcium-Lignosulfonat mit höherem Molekulargewicht auszuscheiden, man das Sulfitlauge-Filtrat mit Natriumsulfat und Schwefelsäure behandelt, um das Calcium weitgehend in Form von Calciumsulfat abzutrennen und man das Filtrat, welches das Lignosulfonat enthält, gegebenenfalls einengt.

2. Lignosulfonat nach Anspruch 1, **dadurch gekennzeichnet,** daß es ein gewichtsmittleres Molekulargewicht von 12700 bzw. ein zahlenmittleres Molekulargewicht von 1564 aufweist.

3. Lignosulfonat nach Anspruch 1 oder 2, **dadurch gekennzeichnet,** daß es ein gewichtsmittleres Molekulargewicht von 8500 bzw. ein zahlenmittleres Molekulargewicht von 1500 aufweist.

4. Lignosulfonat nach einem der Ansprüche 1 bis 3, **dadurch gekennzeichnet,** daß es 40 - 55 % kurzkettiger, teilweise oxidativ veränderter Bruchstücke von Zellulose und deren Begleitstoffen enthält.

5. Lignosulfonat nach Anspruch 4, **dadurch gekennzeichnet,** daß es einen Anteil an Oligosacchariden von 12 bis 16 Gew% aufweist.

6. Lignosulfonat nach Anspruch 5, **dadurch gekennzeichnet,** daß es einen Anteil an reduzierenden Zuckern von maximal 1 Gew% aufweist.

7. Lignosulfonat nach Anspruch 6, **dadurch gekennzeichnet,** daß es einen Sulfonierungsgrad von 1,2 bis 1,5 aufweist.

8. Lignosulfonat nach einem der Ansprüche 1 bis 7, **dadurch gekennzeichnet,** daß es aus einem Holz gewonnen wird, das zumindest teilweise aus Nadelholz besteht.

9. Verfahren zur Gewinnung eines Lignosulfonats mit einem Molekulargewicht von 8000 bis 15000, **dadurch gekennzeichnet,** daß man eine an Calcium verarmte Sulfitlauge einer sauren Holzsulfitpulpe mit einer Menge an Calciumhydroxid versetzt, die ausreicht, um Calcium-Lignosulfonat mit höherem Molekulargwicht auszuschneiden, man das Sulfitlauge-Filtrat mit Natriumsulfat und Schwefelsäure behandelt, um das Calcium weitgehend in Form von Calciumsulfat abzutrennen und man das Filtrat, welches das Lignosulfonat enthält, gegebenenfalls einengt.

10. Verwendung des Lignosulfonats nach einem der Ansprüche 1 bis 8, zur Herabsetzung der Schleimbildung in Anlagen, in denen Wasser im Kreislauf geführt wird.

11. Verwendung nach Anspruch 10, **dadurch gekennzeichnet,** daß das Kreislaufwasser Siebwasser von Papiermaschinen ist.

12. Verwendung nach Anspruch 11, **dadurch gekennzeichnet,** daß man das Lignosulfonat zusammen mit einem Biozid einsetzt.

13. Verwendung nach Anspruch 12, **dadurch gekennzeichnet,** daß das Biozid in einer Menge von 0,01 bis 2.0 g/t Wasser eingesetzt wird.


## Claims

1. A lignosulfonate with a weight-average molecular weight of 8000 to 15000, obtained by mixing a calcium-depleted sulfite lye of an acidic wood sulfite pulp with an amount of calcium hydroxide which suffices to deposit calcium lignosulfonate with a higher molecular weight, treating the sulfite lye filtrate with sodium sulfate and sulfuric acid to separate the calcium largely in the form of calcium sulfate, and optionally concentrating the filtrate containing the lignosulfonate.

2. The lignosulfonate of claim 1, characterized in that it has a weight-average molecular weight of 12700 or a number-average molecular weight of 1564.

3. The lignosulfonate of claim 1 or 2, characterized in that it has a weight-average molecular weight of 8500 or a number-average molecular weight of 1500.

4. The lignosulfonate of any of claims 1 to 3, characterized in that it contains 40 to 55% short-chain, partly oxidatively altered fragments of cellulose and accompanying substances thereof.

5. The lignosulfonate of claim 4, characterized in that it has a proportion of oligosaccharides of 12 to 16 wt%.

6. The lignosulfonate of claim 5, characterized in that it has a proportion of reducing sugars of at most 1 wt%.

7. The lignosulfonate of claim 6, characterized in that it has a degree of sulfonation of 1.2 to 1.5.

8. The lignosulfonate of any of claims 1 to 7, characterized in that it is obtained from wood consisting at least partly of softwood.

9. A method for obtaining a lignosulfonate with a molecular weight of 8000 to 15000, characterized by the steps of mixing a calcium-depleted sulfite lye of an acidic wood sulfite pulp with an amount of calcium hydroxide which suffices to deposit calcium lignosulfonate with a higher molecular weight, treating the sulfite lye filtrate with sodium sulfate and sulfuric acid to separate the calcium largely in the form of calcium sulfate, and optionally concentrating the filtrate containing the lignosulfonate.

10. Use of the lignosulfonate of any of claims 1 to 8 for reducing slime formation in plants that circulate water.

11. The use of claim 10, characterized in that the circulating water is the white water of paper machines.

12. The use of claim 11, characterized in that the lignosulfonate is used together with a biocide.

13. The use of claim 12, characterized in that the biocide is used in an amount of 0.01 to 2.0 g/t water.


## Revendications

1. Lignosulfonate ayant une masse moléculaire moyenne en poids comprise entre 8000 et 15000, que l'on peut obtenir en faisant réagir une lessive de sulfite appauvrie en calcium obtenue à partir d'une pâte de bois acide au sulfite avec une quantité d'hydroxyde de calcium suffisante pour séparer le lignosulfonate de calcium ayant une masse moléculaire élevée, en traitant le filtrat de lessive de sulfite avec du sulfate de sodium et de l'acide sulfurique, pour séparer dans une large mesure le calcium sous forme de sulfate de calcium, et éventuellement en épaississant par évaporation le filtrat qui contient le lignosulfonate.

2. Lignosulfonate selon la revendication 1, caractérisé en ce qu'il présente une masse moléculaire moyenne en poids de 12700 ou encore une masse moléculaire moyenne en nombre de 1564.

3. Lignosulfonate selon la revendication 1 ou 2, caractérisé en ce qu'il présente une masse moléculaire moyenne en poids de 8500 ou encore une masse moléculaire moyenne en nombre de 1500.

4. Lignosulfonate selon l'une des revendications 1 à 3, caractérisé en ce qu'il comprend entre 40 et 55% de fragments de cellulose, à courtes chaînes, partiellement modifiés par oxydation, et des produits secondaires de ces derniers.

5. Lignosulfonate selon la revendication 4, caractérisé en ce qu'il présente une teneur en oligosaccharides comprise entre 12 et 16% en poids.

6. Lignosulfonate selon la revendication 5, caractérisé en ce qu'il présente une teneur en sucres réducteurs d'au plus 1% en poids.

7. Lignosulfonate selon la revendication 6, caractérisé en ce qu'il présente un degré de sulfonation compris entre 1,2 et 1,5.

8. Lignosulfonate selon l'une des revendications 1 à 7, caractérisé en ce qu'il est obtenu à partir d'un bois, qui est au moins partiellement constitué de bois de conifère.

9. Procédé d'obtention d'un lignosulfonate ayant une masse moléculaire comprise entre 8000 et 15000, caractérisé en ce que l'on fait réagir une lessive de sulfite appauvrie en calcium obtenue à partir d'une pâte de bois acide au sulfite avec une quantité d'hydroxyde de calcium suffisante pour séparer le lignosulfonate de calcium ayant une masse moléculaire élevée, on traite le filtrat de la lessive de sulfite avec du sulfate de sodium et de l'acide sulfurique, pour séparer dans une large mesure le calcium sous forme de sulfate de calcium, et éventuellement on épaissit par évaporation le filtrat qui contient le lignosulfonate.

10. Utilisation du lignosulfonate selon l'une des revendications 1 à 8, pour combattre les dépôts mucilagineux dans les installations, dans lesquelles on fait circuler de l'eau en circuit.

11. Utilisation selon la revendication 10, caractérisée en ce que l'eau en circuit est de l'eau pour tamis provenant de machines à papier.

12. Utilisation selon la revendication 11, caractérisée en ce que l'on utilise le lignosulfonate avec un biocide.

13. Utilisation selon la revendication 12, caractérisée en ce que le biocide est utilisé suivant une teneur comprise entre 0,01 et 2.0 g/t d'eau.